# EUROPEAN PATENT SPECIFICATION

(11) **EP 1 965 655 B1**
(45) Date of publication and mention of the grant of the patent: **28.04.2010**
(21) Application number: 05823048.3
(22) Date of filing: 30.12.2005
(51) Int. Cl.: A23G 4/08, A23G 4/02

(54) **CHEWING GUM AND GUM BASE COMPRISING STYRENE-ISOPRENE-STYRENE COPOLYMERS**
KAUGUMMI UND GUMMIBASIS ENTHALTEND STYROL-ISOPREN-STYROL-COPOLYMERE
CHEWING-GUM ET GOMME DE BASE COMPRENANT DES COPOLYMERES DE STYRENE-ISOPRENE-STYRENE

(43) Date of publication of application: 10.09.2008
(73) Proprietor: Gumlink A/S, 7100 Vejle (DK)
(72) Inventor: NEERGAARD, Jesper, DK-8362 Hørning (DK)
(74) Representative: Olesen, Kaj
(86) International application number: PCT/DK2005/000839
(87) International publication number: WO 2007/076856

(56) References cited:
- EP-A- 0 066 864
- WO-A-01/77228
- US-A1- 2003 124 220
- US-B1- 6 180 144
- ROY D ET AL: "RHEOLOGICAL BEHAVIOR OF SHORT CARBON FIBER-FILLED THERMOPLASTIC ELASTOMER BASED ON STYRENE-ISOPRENE-STYRENE BLOCK COPOLYMER" JOURNAL OF APPLIED POLYMER SCIENCE, JOHN WILEY AND SONS INC. NEW YORK, US, vol. 49, no. 8, 20 August 1993 (1993-08-20), pages 1475-1482, XP000461137 ISSN: 0021-8995

## Description

### FIELD OF THE INVENTION

The invention relates to the field of chewing gum. In particular, the invention provides a gum base and a chewing gum comprising styrene-isoprene-styrene copolymers.

### BACKGROUND OF THE INVENTION

Chewing gums available today generally comprises a substantially lipophilic part, a gum base, and further additives, e.g. water soluble sweeteners, flavors, etc. The gum base may typically comprise one or further elastomers such as high molecular weight elastomers such as PIB, SBR or butyl rubber.

In US 6.184.144 B1, a chewing gum is disclosed consisting of: (1) about 5 weight percent to about 95 weight percent of a rubbery elastomer; (2) about 0 weight percent to about 75 weight percent of an elastomer plasticizer selected from the group consisting of natural rosin esters and synthetic terpene resins; (3) about 1 weight percent to about 65 weight percent of a filler material; (4) a sufficient amount of carnosic acid to stabilize the chewing gum base; and (5) optionally, up to 30 weight percent of a wax. The rubbery elastomer is styrene-butadiene rubber, i.e. SBR.

### SUMMARY OF THE INVENTION

In the following, a percentage of ingredients in the chewing gum refer to the amount of ingredient in the uncoated chewing gum.

The invention relates to a chewing gum comprising at least one styrene-isoprene-styrene copolymer (SIS) in an amount from 0.1 % to 70 % by weight of the chewing gum.

According to a presently preferred embodiment of the invention, a chewing gum may be obtained which shows improved rheological properties, elastic properties and storage abilities.

Preferably this is achieved by incorporating the SIS in the gum base.

In particular, the application of SIS in chewing gum has been shown to improve the form-stability of the chewing gum or the gum base over time. This is particularly advantageous in order to obtain advantageous storage qualities of the finished chewing gum product.

Furthermore, the application of SIS has provided a gum base or a chewing gum with improved rheological properties and elastic properties giving an overall improved experience for the person chewing the chewing gum. Accordingly, SIS may advantageously be applied and used e.g. as an elastomer in chewing gum or gum base.

The required amount of SIS in the final chewing gum formulation may depend significantly on the characteristics of the applied SIS raw material.

The characteristics of the SIS copolymer may e.g. depend on the amount of di-blocks comprised in the tri-block SIS compound as these di-blocks e.g. may have a plasticizing effect on SIS.

Furthermore, the characteristics of the final chewing gum or the gum base may e.g. depend on the ratio between the individual styrene repeating units and isoprene repeating units in the applied tri-block copolymer. This follows e.g. from the fact that the ratio has an effect on the elasticity and thus the need for a certain amount of SIS as compared to the present amount of other ingredients acting as e.g. plasticizing agents. Hence the amount of SIS in the final chewing gum may in addition depend on the blend of other ingredients, e.g. plasticizers.

In an embodiment of the invention the chewing gum comprises SIS in an amount from 0.1 % to 30 % by weight of said chewing gum.

In an embodiment of the invention the chewing gum comprises SIS in an amount from 0.1 % to 15 % by weight of said chewing gum.

In an embodiment of the invention the chewing gum comprises SIS in an amount from 0.1 % to 10 % by weight of said chewing gum.

In an embodiment of the invention the SIS copolymer is elastomeric.

According to a preferred embodiment of the invention, the SIS copolymer is applied and used as an elastomer.

In an embodiment of the invention, the chewing gum further comprises at least one di-block styrene-isoprene copolymer.

According to an advantageous embodiment of the invention di-block styrene-isoprene copolymer may be applied as plasticizing agent thereby reducing the required amount of further plasticizing compounds.

In an embodiment of the invention, the chewing gum further comprises at least one di-block styrene-isoprene copolymer as the sole plasticizer.

In an embodiment of the invention the ratio of said di-block copolymer to SIS block copolymer is less than 60 to 40.

In an embodiment of the invention the ratio of said di-block copolymer to tri-block polymer is less than 40 to 60.

Di-block copolymers may act as a plasticizing agent in the finished chewing gum product. Hence, the application of different amounts of di-block copolymers may help to establish the textures of the chewing gum, e.g. in combination with the adding of conventional elastomer plasticizers, such as in the form of resins.

In an embodiment of the invention the styrene/isoprene ratio of said SIS is between 2/98 and 85/15.

The styrene/isoprene ratio in the SIS may be applied to adjust the desired properties of the SIS copolymer and consequently, the properties of the final product. Thus, the elastomeric properties of the applied SIS copolymer may be increased when applying a high content of isoprene monomers, i.e. a low styrene/isoprene ratio.

In an embodiment of the invention the styrene/isoprene ratio of said SIS is between 5/95 and 85/15.

In an embodiment of the invention the styrene/isoprene ratio of said SIS is between 10/90 and 75/25.

In an embodiment of the invention the styrene/isoprene ratio of said SIS is between 15/85 and 40/60.

In an embodiment of the invention the styrene/isoprene ratio of said SIS is less than 15/85.

According to an advantageous embodiment of the invention, the applied SIS copolymer should have minimum of elasticity obtained through a relatively low styrene/isoprene ratio.

In an embodiment of the invention the styrene/isoprene ratio of said SIS is between 15/85 and 75/25.

In an embodiment of the invention the styrene/isoprene ratio of said SIS is between 15/85 and 75/25.

In an embodiment of the invention the SIS has a molecular weight (Mw) of 50,000 to 1,000,000 g/mol.

In an embodiment of the invention the SIS has a molecular weight (Mw) of 100,000 to 500,000 g/mol.

According to an embodiment of the invention a molecular weight of 200,000 g/mol is presently preferred as this molecular weight may form a solid basis for a chewing gum having properties corresponding to or better than chewing gum based on conventional elastomer.

In an embodiment of the invention the chewing gum comprises synthetic and/or natural resin in an amount of 1 to 50% of said chewing gum.

According to a preferred embodiment of the invention, SIS may be applied in gum base or chewing gum and be plasticized by synthetic or natural resins, e.g. those conventionally used in gum base or chewing gum, and an advantageous texture may be obtained combined with an attractive release of relevant ingredients such as flavor, sweetener and/or active ingredients.

It should be noted that the amount of natural and/or synthetic resins may be obtained by one or more resins, natural or synthetic or combinations thereof.

In an embodiment of the invention the chewing gum comprises resin selected from the group consisting of synthetic and natural resin, or any combination thereof in an amount of 3 to 25% of said chewing gum.

In an embodiment of the invention the chewing gum comprises resin selected from the group consisting of synthetic and natural resin, or any combination thereof in an amount of 5 to 20% of said chewing gum.

The quantity of resins typically constitutes 20-80 percent by weight of the gum base and 2-40 percent by weight of the chewing gum.

In an embodiment of the invention the synthetic resin is PVA or terpene resins or any combination thereof.

In an embodiment of the invention the natural resin is ester gum.

In an embodiment of the invention the synthetic and/or natural resins have a molecular weight Mn of 500 to 200000 g/mol.
In an embodiment of the invention the synthetic and/or natural resin have a molecular weight Mn of 500 to 50000 g/mol.

In an embodiment of the invention the chewing gum comprises a mixture of synthetic and/or natural resins in a ratio between 1:20 and 20:1.

Resin in conventional chewing gum bases typically include synthetic resins such as PVA and natural resins such as rosin esters, which are often referred to as ester gums. Additionally, natural resins such as glycerol esters of partially hydrogenated rosins, glycerol esters of polymerized rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins are typically applied in chewing gum bases. Other resinous compounds typically applied in chewing gum bases include synthetic resins such as terpene resins derived from alpha-pinene, beta-pinene, and/or d-limonene and natural terpene resins.

In an embodiment of the invention the chewing gum comprises synthetic and/or natural elastomers in an amount of less than 30% of said chewing gum, preferably less than 20% of said chewing gum.

In an embodiment of the invention the chewing gum comprises synthetic and/or natural elastomers in an amount of less than 15% of said chewing gum, preferably less than 10% of said chewing gum.

Synthetic elastomers may include, but are not limited to, polyisobutylene, isobutylene-isoprene copolymer (butyl rubber), styrene-butadiene, copolymers having styrene-butadiene ratios of about 1: 3 to about 3: 1, PVA, polyisoprene, polyethylene, vinyl acetate-vinyl laurate copolymer having vinyl laurate content of about 5% to about 50% by weight of the copolymer, and combinations thereof.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof.

In an embodiment of the invention the chewing gum comprises synthetic and/or natural elastomers in an amount of 2 to 30 % of said chewing gum.

In an embodiment of the invention the chewing gum comprises synthetic and/or natural elastomers in an amount of 3 to 25 % of said chewing gum.

In an embodiment of the invention the chewing gum comprises bulk sweetener in an amount from 0.5% to 95% of said chewing gum.

In an embodiment of the invention the chewing gum comprises bulk sweetener in an amount from 20% to 70% of said chewing gum.

In an embodiment of the invention the chewing gum comprises bulk sweetener in an amount from 25% to 65% of said chewing gum.

The applicant has experienced very advantageous results when applying combinations of SIS and bulk sweetener in the chewing gum. Thus, SIS tends to provide a combination of the desired texture and an advantageous release of sweeteners.

Bulk sweeteners include both sugar and sugarless components. Sugar sweeteners generally include saccharide-containing components commonly known in the chewing gum art, including but not limited to, sucrose, dextrose, maltose, dextrin, dried invert sugar, fructose, levulose, glactose, corn syrup solids, and the like, alone or in combination. Sugarless sweeteners include, but are not limited to, sugar alcools such as sorbitol, mannitol, xylitol, hydrogenated starch hydrolysates, maltitol, and the like, alone or in combination.

In an embodiment of the invention the chewing gum comprises one or more flavoring agents.

In an embodiment of the invention the chewing gum comprises SIS in combination with one or more hydrophilic flavors.

According to an embodiment of the invention it has been observed that an improved release was seen for e.g. strawberry as flavor. Other flavors acting to improved release abilities or texture properties are within the scope of the invention.

In an embodiment of the invention the chewing gum comprises SIS in combination with one or more hydrophobic flavors.

In some embodiments, a chewing gum may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, preferably less than 2 mm or more preferred less than 1 mm, calculated as the longest dimension of the particle. The natural flavoring agent may in a form where the particle size is from about 3 µm to 2 mm, such as from 4 µm to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range of 0.1 to 5% by weight of the total composition.

In an embodiment of the invention the chewing gum further comprises one or more active ingredients.

According to an embodiment of the invention, applicable active ingredients may be selected among those listed in the detailed description.

In an embodiment of the invention the chewing gum comprises high intensity sweetener in an amount of less than 2 % of said chewing gum.

High-intensity sweeteners in chewing gum typically may range from about 0.01 to 0.60 by weight percent of the total composition.

In an embodiment of the invention the chewing gum is provided with coating.

In an embodiment of the invention the coating is selected from the group consisting of hard coating, soft coating and edible film-coating.

In an embodiment of the invention the chewing gum comprises coating in an amount of 0.1 to 95 percent by weight of a coated chewing gum piece.

In an embodiment of the invention the chewing gum comprises coating in an amount of 0.1 to 75 percent by weight of a coated chewing gum piece.

In an embodiment of the invention the chewing gum comprises from 0 to 50% by weight of the chewing gum of filler, preferably 5-20% by weight of the chewing gum.

In an embodiment of the invention the chewing gum is center-filled.

In an embodiment of the invention the chewing gum is a compressed chewing gum made by tabletting.

The SIS copolymer has proven very suitable for compression. It can with advantage be tabletted as the consistency of it allows easy processing. In standard compression formulations one of two problems may arise, either the substance is sticky which may result in problems with dosing prior to compression or the substance is non-sticky which may result in decomposition following a compression of a chewing gum.

In an embodiment of the invention the chewing gum comprises SIS in combination with one or more additional hydrophilic ingredients.

In an embodiment of the invention the chewing gum comprises SIS in combination with one or more additional hydrophobic ingredients.

In an embodiment of the invention the chewing gum comprises biodegradable elastomers and resins.

In an embodiment of the invention the chewing gum comprises one or more cooling agent.

In an embodiment of the invention, the chewing gum may comprise cooling agent(s) incorporated in the chewing gum or in the coating.

Suitable cooling agents include:
substituted p-menthanes, substituted p-menthane-carboxamides (e.g., N-ethyl-p-menthane-3-carboxamide (FEMA 3455)), acyclic carboxamides, substituted cyclohexanamides, substituted cyclohexane carboxamides, substituted ureas and sulphonamides, and substituted menthanols, hydroxymethyl and hydroxyethyl derivatives of p-menthane, menthyl succinate, 2-mercapto-cyclo-decanone, 2-isopropanyl-5-methylcyclohexanol, hydroxycarboxylic acids with 2-6 carbon atoms, menthone glycerol ketals, 3-1-menthoxypropane-1,2-diol and menthyl lactate.

In an embodiment of the invention the chewing gum comprises one or more warming agents.

Physiological warming agents to be used in a chewing gum may include:
vanillyl alcohol n-butyl ether, vanillyl alcohol n-propyl ether, vanillyl alcohol isopropyl ether, vanillyl alcohol isobutyl ether, vanillyl alcohol isoamyl ether, vanillyl alcohol n-hexyl ether, vanillyl alcohol methyl ether, vanillyl alcohol ethyl ether, vanillyl alcohol n-amino ether, gingerol, zingerone, capsaicin, shogaol, paradol, dihydrocapsaicin, nordihydrocapsaicin, homocapsaicin, homodihydrocapsaicin, ethanol, iso-propyl alcohol, iso-amylalcohol, benzyl alcohol, chloroform, eugenol, cinnamon oil, cinnamic aldehyde, and phosphate derivatives thereof. The phosphate derivatives are described and can be found in WO 97/02273, hereby incorporated by reference.

In an embodiment of the invention the chewing gum further comprises at least one di-block styrene-isoprene copolymer in an amount of less than 50 % by weight of the chewing gum.

According to a preferred embodiment of the invention, the amount of di-blocks should preferably be kept relatively low when elastomeric properties of the final chewing are desired. According to a further preferred embodiment of the invention, the amount should be less than about 25% by weight of the chewing gum.

In an embodiment of the invention the chewing gum further comprises at least one di-block styrene-isoprene copolymer in an amount of less than 10 % by weight of said chewing gum.

In an embodiment of the invention the chewing gum further comprises at least one polymer having a molecular weight (Mw) of 50,000 to 1,000,000 g/mol.in an amount of less than 20 % by weight of the chewing gum.

In a preferred embodiment, the amount of polymers, other than SIS, having a molecular weight (Mw) of 50,000 to 1,000,000 g/mol may be relatively low in order to benefit from the advantageous properties of SIS. According to an embodiment of the invention, this amount should preferably be less than 10 % by weight of the chewing gum.

In an embodiment of the invention the chewing gum further comprises at least one polymer having a molecular weight (Mw) of 100,000 to 1,000,000 g/mol.in an amount of less than 20 % by weight of the chewing gum.

In a preferred embodiment, the amount of polymers, other than SIS, having a molecular weight (Mw) of 100,000 to 1,000,000 g/mol may be relatively low in order to benefit from the advantageous properties of SIS. According to an embodiment of the invention, this amount should preferably be less than 10 % by weight of the chewing gum.

In an embodiment of the invention the chewing gum is granulated.

Granulated chewing gum may e.g. be used for tabletting per se. The chewing gum granules have advantageous texture and processing properties.

Moreover, the invention relates to a gum base comprising at least one styrene-isoprene-styrene copolymer (SIS) in an amount from 0.1 % to 99 % by weight of the gum base.

In an embodiment of the invention the gum base comprises SIS in an amount from 0.1 % to 75 % by weight of the gum base.

In an embodiment of the invention the gum base comprises SIS in an amount from 0.1 % to 50 % by weight of the gum base.

In an embodiment of the invention the gum base comprises SIS in an amount from 0.1 % to 30 % by weight of the gum base.

In an embodiment of the invention the SIS copolymer of the gum base is elastomeric.

In an embodiment of the invention the gum base further comprises at least one di-block styrene-isoprene copolymer

In an embodiment of the invention the gum base further comprises at least one di-block styrene-isoprene copolymer as the sole plasticizer.

In an embodiment of the invention the ratio of said di-block copolymer to SIS block copolymer in the gum base is less than 60 to 40.

In an embodiment of the invention the ratio of said di-block copolymer to tri-block polymer is less than 40 to 60.

In an embodiment of the invention the styrene/isoprene ratio of said SIS is between 2/98 and 85/15.

In an embodiment of the invention the styrene/isoprene ratio of said SIS in the gum base is between 5/95 and 85/15

In an embodiment of the invention the styrene/isoprene ratio of said SIS in the gum base is between 10/90 and 75/25

In an embodiment of the invention the styrene/isoprene ratio of said SIS in the gum base is between 15/85 and 40/60

In an embodiment of the invention the styrene/isoprene ratio of said SIS in the gum base is less than 15/85.

In an embodiment of the invention the styrene/isoprene ratio of said SIS in the gum base is between 15/85 and 75/25.

In an embodiment of the invention the styrene/isoprene ratio of said SIS in the gum base is between 15/85 and 75/25.

In an embodiment of the invention the SIS has a molecular weight (Mw) of 50,000 to 1,000,000 g/mol.

In an embodiment of the invention the SIS has a molecular weight (Mw) of 100,000 to 500,000 g/mol.

In an embodiment of the invention the gum base comprises synthetic and/or natural resin in an amount of 1 to 95% of said gum base.

In an embodiment of the invention the gum base comprises synthetic and/or natural resin in an amount of 3 to 70% of said gum base.

In an embodiment of the invention the gum base comprises synthetic and/or natural resin in an amount of 5 to 55% of said gum base.

In an embodiment of the invention the synthetic resin is PVA or terpene resins or any combination thereof.

In an embodiment of the invention the natural resin is ester gum.

In an embodiment of the invention the synthetic and/or natural resins have a molecular weight Mn of 500 to 200000 g/mol.

In an embodiment of the invention the synthetic and/or natural resin have a molecular weight Mn of 500 to 50000 g/mol.

In an embodiment of the invention the gum base comprises a mixture of synthetic and/or natural resins in a ratio between 1:20 and 20:1.

In an embodiment of the invention the gum base comprises synthetic and/or natural elastomers in an amount of less than 70% of said gum base, preferably less than 60% of said gum base.

In an embodiment of the invention the gum base comprises synthetic and/or natural elastomers in an amount of less than 55% of said gum base, preferably less than 40% of said gum base.

In an embodiment of the invention the gum base comprises synthetic and/or natural elastomers in an amount of 3 to 80 % of said gum base.

In an embodiment of the invention the gum base comprises synthetic and/or natural elastomers in an amount of 5 to 50 % of said gum base.

In an embodiment of the invention the gum base comprises filler.

In an embodiment of the invention the gum base is granulated.

Granulated gum base may e.g. be used for tabletting, e.g. when mixed with further chewing gum ingredients such as sweeteners and further ingredients typically added to gum base in order to obtained the final chewing gum. The gum base granules have advantageous texture and processing properties.

In an embodiment of the invention the gum base is in powder form.

Moreover, the invention relates to a method of manufacturing chewing gum granules for tabletting, the method comprising the steps of providing a chewing gum substance according to any of the claims 1-54 and granulating said substance into chewing gum granules.

Although the chewing gum substance according to the invention is very suitable for processing and in particular very suitable for granulation, the granulation may advantageously be performed on a chewing substance which has been cooled to less than +10°C, preferably less than 0°C.

In an embodiment of the invention, the chewing gum is in powder form.

Moreover, the invention relates to a method of manufacturing gum base granules for tabletting, the method comprising the steps of providing a gum base substance according to any of the claims 55-71 and granulating said substance into gum base granules.

Although the gum base substance according to the invention is very suitable for processing and in particular very suitable for granulation, the granulation may advantageously be performed on a gum base substance which has been cooled to less than +10°C, preferably less than 0°C.

Moreover, the invention relates to a method of manufacturing a chewing gum wherein the chewing gum is formed by a tabletting process on the basis of chewing gum granules and wherein said chewing gum granules comprise chewing gum according to any of the claims 1-54.

Moreover, the invention relates to a method of manufacturing a chewing gum wherein the chewing gum is formed by a tabletting process on the basis of chewing gum in powder form and wherein the chewing gum in powder form comprises chewing gum according to any of the claims 1-54.

Moreover, the invention relates to a method of manufacturing a chewing gum wherein the chewing gum is formed by a tabletting process on the basis of gum base granules and chewing gum ingredients and wherein said gum base granules comprise gum base according to any of the claims 55-71.

Moreover, the invention relates to a method of manufacturing a chewing gum wherein the chewing gum is formed by a tabletting process on the basis of gum base in powder form and chewing gum ingredients and wherein the gum base in powder form comprises gum base according to any of the claims 55-71.

### THE DRAWINGS

The invention will now be described with reference to the drawings of which
fig. 1 illustrates the result of a sensory evaluation test where difference in sweetness intensity is investigated for strawberry flavored chewing gums,
fig. 2 illustrates the result of a sensory evaluation test where difference in softness intensity is investigated for strawberry flavored chewing gums,
fig. 3 illustrates the result of a sensory evaluation test where difference in elasticity intensity is investigated for strawberry flavored chewing gums,
fig. 4 illustrates the result of a sensory evaluation test where difference in softness intensity is investigated for peppermint flavored chewing gums,
fig. 5 illustrates the result of a sensory evaluation test where difference in elasticity intensity is investigated for peppermint flavored chewing gums, and
fig. 6 illustrates the result of a sensory evaluation test where difference in sweetness intensity is investigated for peppermint flavored chewing gums.

### Detailed description

In general, a chewing gum composition typically comprises a water-soluble bulk portion, a water-insoluble chewable gum base portion and flavoring agents. The water-soluble portion dissipates with a portion of the flavoring agent over a period of time during chewing. The gum base portion is retained in the mouth throughout the chew. The term "chewing gum" refers to both a chewing and bubble type gum in its general sense.

The gum base is the masticatory substance of the chewing gum, which imparts the chew characteristics to the final product. The gum base typically defines the release profile of flavors and sweeteners and plays a significant role in the gum product.

The insoluble portion of the gum typically may contain any combination of elastomers, vinyl polymers, elastomer plasticizers, waxes, softeners, fillers and other optional ingredients such as colorants and antioxidants. Elastomer plasticizers may also generally be referred to as a resin or as a resinous compound.
The composition of gum base formulations can vary substantially depending on the particular product to be prepared and on the desired masticatory and other sensory characteristics of the final product.

A gum base formulation may e.g. comprise from 1 to 80% elastomeric compounds, 2 to 85% elastomer plasticizers, 0 to 60% waxes, 5 to 65% softeners including emulsifiers, 0 to 70% fillers, and 0 to 35% miscellaneous ingredients such as antioxidants, colorants, etc. However, typical ranges (% by weight of the gum base) of the above gum base components are: 1 to 50% elastomeric compounds, 5 to 55% elastomer plasticizers, 0 to 40% waxes, 5 to 35% softeners, 0 to 50% fillers, and 0 to 5% miscellaneous ingredients such as antioxidants, colorants, etc. The gum base may comprise 5 to 95 percent, by weight, of the chewing gum, more commonly; the gum base comprises 10 to 60 percent of the gum. Elastomers provide the rubbery, cohesive nature to the gum, which varies depending on these ingredients' chemical structure and how it may be compounded with other ingredients. Elastomers suitable for use in some embodiments of gum bases and chewing gums may include natural or synthetic types.

According to an embodiment, an elastomer to be used may be a copolymer made from styrene and isoprene. More specifically, this elastomer may be a styrene-isoprene-styrene (SIS) block copolymer. The styrene and isoprene monomers are polymerized in a precisely controlled reaction to end up with a triblock copolymer These SIS triblock copolymers consist of polystyrene sequences or blocks at each end of the polymer chain and an isoprene sequence in the centre. Polystyrene end-blocks of adjacent chains tend to align in small crystalline like domains, so that clusters of polystyrene are distributed in a network of isoprene. As the polystyrene chain ends are only linked by physical attraction of each other, the polystyrene domains are temporary in character. Such a structure makes SIS polymers thermoplastic elastomers that exhibit the elasticity and resilience of polyisoprene along with the hardness of polystyrene ends. Like all thermoplastic elastomers, SIS is less resilient than chemically linked molecular solids, and it does not recover as efficiently from deformation. Nevertheless, SIS is easily processed and reprocessed, owing to its thermoplastic properties, and it is remarkably strong at room temperature. It is frequently used for injection-molded parts, as hot-melt adhesives (especially in shoes), and as an additive to improve the properties of bitumen.

During production of SIS some remains from the polymerisation may be left over in the final product. An important one of these is the so-called diblock. A diblock is, as indicated by the name, an incomplete triblock, i.e. styrene-isoprene or equivalent isoprene-styrene. The diblocks do not have the ability to contribute to the elastomeric network in the same sense as the triblocks, but a larger amount of diblocks in the final polymer product will have an effect of plasticizing the elastomeric network. The amount of diblocks in the final product is given in percent of the total amount of final polymer product. The percentage of diblocks may influence the final textural properties of the chewing gum.

Longer chains of isoprene, i.e. a larger block of isoprene, will increase the elasticity of the SIS. Hence the ratio of these monomers will affect the total elasticity of the SIS. The parameter to describe this ratio is called the styrene/rubber ratio or styrene/isoprene ratio, which may be in the range 2/98 to 80/20, preferably in the range of 15/85 to 75/25.

SIS may be added in an amount of 0.1 to 70 % of the chewing gum and preferably in 0.1 to 30 % of the chewing gum in order to obtain the desired properties of the chewing gum with respect to e.g. manufacture, texture and release.

Additional elastomers besides SIS may be any water-insoluble polymer known in the art, and includes those polymers utilized for chewing gum and bubble gum listed in U.S. Food and Drug Administration, CFR, Title 21, Section 172,615, as "Masticatory Substances of Natural Vegetable Origin" and "Masticatory Substances, Synthetic", the contents of which are incorporated herein by reference for all purposes.

Useful natural elastomers include natural rubber such as smoked or liquid latex and guayule, natural gums such as jelutong, lechi caspi, perillo, sorva, massaranduba balata, massaranduba chocolate, nispero, rosidinha, chicle, gutta percha, gutta kataiu, niger gutta, tunu, chilte, chiquibul, gutta hang kang.

Useful synthetic elastomers include high molecular weight elastomers such as butadienestyrene copolymers, polyisoprene, polyisobutylene and isobutylene-isoprene copolymers, low molecular weight elastomers such as polybutene, polybutadiene and polyisobutylene, vinyl polymeric elastomers such as PVA, polyethylene, vinyl copolymeric elastomers such as vinyl acetate/vinyl laurate, vinyl acetate/vinyl stearate, ethylene/vinyl acetate, polyvinyl alcohol or mixtures thereof.

Butadiene-styrene type elastomers (SBR) typically are copolymers of from about 20:80 to 60:40 styrene:butadiene monomers. The ratio of these monomers affects the elasticity of the SBR as evaluated by mooney viscosity. As the styrene:butadiene ratio decreases, the mooney viscosity decreases.

The structure of SBR typically consists of straight chain 1,3-butadiene copolymerized with phenylethylene (styrene) and provides the non-linear molecular nature of these elastomers. The average molecular weight of SBR is <600,000 g/mole.

Isobutylene-isoprene type elastomers (butyl rubber) have molar percent levels of isoprene ranging from 0,2 to 4,0. Similar to SBR, as the isoprene:isobutylene ratio decreases, so does the elasticity, measured by mooney viscosity.

The structure of butyl rubber typically consists of branched 2-methyl-1,3-butadiene (isoprene) copolymerized with branched 2-methylpropene (isobutylene), and, as with SBR, this type of structure is non-linear in nature. The average molecular weight of butyl rubber is in the range from 150,000 g/mole to 1,000,000 g/mole.

Polyisobutylene (PIB) as with SBR and butyl, is also non-linear in nature. The low molecular weight elastomers provide soft chew characteristics to the polymer system and still provide the elastic qualities as do the other elastomers. Average molecular weights may range from about 30,000 to 120,000 g/mole and the penetration may range from about 4 millimeters to 20 millimeters. The higher the penetration, the softer the PIB. Similar to the SBR and butyl, the high molecular weight elastomers provide elasticity of the gum. Average molecular weight may range from 120,000 to 1,000,000 g/mole.

Vinyl copolymeric types of polymers may also be applied as a supplementary polymer of the gum base. For vinyl copolymeric types, the amount of vinyl laurate, vinyl stearate, or ethylene present in the vinyl laurate/vinyl acetate (VL/VA), vinyl stearate/vinyl acetate (VS/VA), or ethylene/vinyl acetate (EVA) copolymers respectively typically ranges from about 10 to about 60 percent by weight of the copolymer. Average molecular weights of these polymers may range from about 2,000 g/mole to about 100,000 g/mole.

The vinyl polymers as polyvinyl alcohol and PVA may have an average molecular weight from about 8,000 g/mole to about 65,000 g/mole.

In some embodiments SIS may preferably be included as elastomer in the gum base. Further elastomers that may be used in combination herewith are e.g. combinations in a gum base of a synthetic elastomer having a high-molecular weight and a low-molecular-weight elastomer. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with PVA, vinyl acetate-vinyl laurate copolymers, respectively and mixtures thereof.

Elastomer plasticizers vary the firmness of the gum base. Their specificity on elastomer inter-molecular chain breaking (plasticizing) along with their varying softening points cause varying degrees of finished gum firmness and compatibility when used in base. This may be important when one wants to provide more elastomeric chain exposure to the alkanic chains of the waxes.

In some embodiments, further polymeric or non-polymeric plasticizers may be applied such as triacetin, acetylated mono-and di-and triglycerides of short chain fatty acids, acetylated mono-and di-and triglycerides of medium chain fatty acids, acetylated monoglycerides of long chain fatty acids, glycerol ester of rosin and low molecular weight PVA. The two latter may also be referred to as a natural and synthetic resin, respectively, within the art. The above mentioned plasticizers may also be referred to as conventional resins in the following description.

The plasticizers used may be of one type or of combinations of more than one type. Typically, the ratios of one to the other are dependent on each respective softening point, the effect on flavor release, and the respective degree of tack they cause to the gum.

Examples of such synthetic resins include PVA, vinyl acetate-vinyl laurate copolymers and mixtures thereof. Examples of synthetic elastomers include, but are not limited to, synthetic elastomers listed in U.S. Food and Drug Administration, CFR, Title 21, Section 172,615, the contents of which are incorporated herein by reference for all purposes.

Examples of natural resins are: Natural rosin esters, often referred to as ester gums including as examples glycerol esters of partially hydrogenated rosins, glycerol esters of polymerized rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins, synthetic resins such as terpene resins derived from alpha-pinene, beta-pinene, and/or d-limonene, and natural terpene resins.

It is common in the industry to combine in a gum base a synthetic elastomer having a high molecular weight and a synthetic elastomer having a low molecular weight. Examples of such combinations of are polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with PVA, vinyl acetate-vinyl laurate copolymers, respectively and mixtures thereof.

In accordance with the general principles in manufacturing a chewing gum within the scope of the invention, variations of different suitable ingredients are listed and explained below.

In some embodiments the chewing gum may comprise coloring agents. According to an embodiment of the invention, the chewing gum may comprise color agents and whiteners such as FD&C-type dyes and lakes, fruit and vegetable extracts, titanium dioxide and combinations thereof.

Further useful chewing gum base components include antioxidants, e.g. butylated hydroxytoluene (BHT), butyl hydroxyanisol (BHA), propylgallate and tocopherols, and preservatives.

In an embodiment of the invention, the chewing gum comprises softeners in an amount of 0 to 18% by weight of the chewing gum, more typically 0 to 12% by weight of the chewing gum.

Waxes may be optional depending on the properties of the individual formulations. Petroleum waxes aid in the curing of the finished chewing gum as well as improve shelf-life and texture. Wax crystal size influences the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes. The compatibility of polymer systems made using normal-alkanic waxes is less when compared to polymer systems made with iso-alkanic waxes.

Waxes and fats may moreover be used for the adjustment of the consistency and for softening of the chewing gum base when preparing chewing gum bases.

Petroleum wax (refined paraffin and microcrystalline wax) and paraffin wax is composed of mainly straight-chained normal-alkanes and branched iso-alkanes. The ratio of normal-alkanes to iso-alkanes varies.

The normal-alkanic waxes typically have carbon chain lengths >C-18 but the lengths are not predominantly longer than C-30. The branched and ring structures are located near the end of the chain for those waxes that are predominantly normal-alkanic. The viscosity of normal-alkanic waxes is <10 mm2/s (at 100 °C) and the combined number average molecular weight is <600 g/mole.

The iso-alkanic waxes typically have carbon lengths that are predominantly greater than C-30. The branched chains and ring structures are located randomly along the carbon chain in those waxes that are predominantly iso-alkanic. The viscosity of iso-alkanic waxes is greater than 10 mm2/s (at 100 °C) and the combined number average molecular weight is >600 g/mole.

Synthetic waxes are produced by means atypical of petroleum wax production and thus are not considered petroleum wax. The synthetic waxes may include waxes containing branched alkanes and copolymerized with monomers such as but not limited to propylene and polyethylene and Fischer Tropsch type waxes. Polyethylene wax is a synthetic wax containing alkane units of varying lengths having attached thereto ethylene monomers.

The natural waxes may include rice bran wax, bees' wax, carnauba wax or candelilla wax.

In some embodiments, any conventionally used and suitable type of wax and fat may be used, such as for instance rice bran wax, polyethylene wax, petroleum wax (refined paraffin and microcrystalline wax), paraffin, beeswax, carnauba wax, candelilla wax, cocoa butter, degreased cocoa powder and any suitable oil or fat, as e.g. completely or partially hydrogenated vegetable oils or completely or partially hydrogenated animal fats.

Softeners/emulsifiers may in some embodiments be added both in the chewing gum and the gum base.

The selection of softeners has an influence on the softness of the base. Softeners modify the texture, cause the hydrophobic and hydrophilic components of the base to be miscible, and may further plasticize the synthetic polymers of the polymer system. The emulsifiers, which belong to the group of softeners, provide the polymer system with water-binding properties, which confer to the polymer system a pleasant smooth surface and reduce its adhesive properties.

Softeners suitable for use in the polymer system include triglycerides of non-hydrogenated, partially hydrogenated and fully hydrogenated vegetable oils and tallow, cocoa butter and degreased cocoa powder and in addition to these the emulsifiers.

The group of triglycerides includes cottonseed, palm, palm kernel, coconut, safflower, rapeseed, sunflower, tallow, soybean, cocoa butter, medium chained triglycerides and the like.

The caproic, caprylic, capric, myristic, lauric and palmitic fatty acids of the triglycerides tend to plasticize the synthetic elastomers more than triglycerides containing predominantly stearic fatty acid.

To the group of emulsifiers belong the monoglycerides, diglycerides, acetylated mono and diglycerides, distilled mono- and diglycerides, glycerol monostearate, propylene glycol monostearate, Na-, K-, Mg- and Ca-stearates, glycerol triacetate, fatty acid monoglycerides (e.g. stearic, palmitic, oleic and linoleic acids), lactic acid esters and acetic acid esters of mono- and diglycerides, sugar esters of edible fatty acids also referred to as sucrose polyesters including those disclosed in WO 00/25598 hereby included by reference, lecithin and hydroxylated lecithin, most of these may contain triglyceride levels less than 2 percent by weight from their manufacturing processing.

The softeners including the emulsifiers may be used alone or at least two or more in combination.

Fillers used in polymer system modify the texture of the polymer system and aid in processing. Particle size has an effect on cohesiveness, density and processing characteristics of the polymer system and its compounding. The smaller the particle size, the more dense and cohesive the final polymer system. Also, by selecting fillers based on their particle size distribution, initial mass compounding may be varied, thus allowing alteration of the compounding characteristics of the initial mass during polymer system processing and ultimately the final chew characteristics of gums made from these polymer systems.

Fillers suitable for use in the polymer system include magnesium and calcium carbonate, ground limestone and silicate types such as magnesium and aluminum silicate, kaolin and clay, aluminum oxide, silicon oxide, talc, as well as titanium oxide, mono-, di- and tricalcium phosphate, sodium sulphate, cellulose polymers such as ethyl, methyl and wood or mixtures thereof.

Talc filler may be used in embodiments of gum bases and chewing gums, that may come in contact with or employ acid flavors or provide an acidic environment needed to prevent degradation of an artificial sweetener by reacting with calcium carbonate type fillers. Mean particle size for calcium carbonate and talc fillers typically range from 0.1 micron to 15 microns.

The fillers may also include natural organic fibers such as fruit vegetable fibers, grain, rice, cellulose and combinations thereof

In an embodiment of the invention, the chewing gum comprises filler in an amount of 0 to 50% by weight of the chewing gum, more typically 5 to 20% by weight of the chewing gum.

In addition to a, typically, water insoluble gum base portion, a typical chewing gum includes a water soluble bulk portion and one or more flavoring agents. The water-soluble portion may include bulk sweeteners, high intensity sweeteners, flavoring agents, softeners, emulsifiers, colors, acidulants, fillers, antioxidants, and other components that provide desired attributes.

Suitable bulk sweeteners include both sugar and non-sugar sweetening components. Bulk sweeteners typically constitute from 5 to 95% by weight of the chewing gum, more typically 20 to 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, com syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomalt, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, neotame, twinsweet, saccharin and its salts, cyclamic acid and its salts, glycyrrhizin, dihydrochalcones, thaumatin, monellin, stevioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve the desired release characteristics. Encapsulation of sweetening agents can also be provided using another chewing gum component such as a resinous compound.

Usage level of the high intensity artificial sweetener will vary considerably and will depend on factors such as potency of the sweetener, rate of release, desired sweetness of the product, level and type of flavor used and cost considerations. Thus, the active level of high potency artificial sweetener may vary from 0 to 8% by weight, preferably 0.001 to 5% by weight. When carriers used for encapsulation are included, the usage level of the encapsulated sweetener will be proportionately higher.

Combinations of sugar and/or non-sugar sweeteners can be used in the chewing gum formulation processed in accordance with the invention. Additionally, the softener may also provide additional sweetness such as aqueous sugar or alditol solutions.

If a low-calorie gum is desired, a low-caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low-calorie bulking agents can be used.

In some embodiments, a chewing gum may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from 3 µm to 2 mm, such as from 4 µM to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to 30% by weight of the final product depending on the desired intensity of the aroma and/or flavor used. Preferably, the content of aroma/flavor is in the range of 0.2 to 3% by weight of the total composition.

In an embodiment of the invention, the flavoring agents comprise natural and synthetic flavorings in the form of natural vegetable components, essential oils, essences, extracts, powders, including acids and other substances capable of affecting the taste profile.

Further chewing gum ingredients, which may be included in some embodiments, include surfactants and/or solubilizers, especially when pharmaceutically or biologically active ingredients are present. As examples of types of surfactants to be used as solubilizers in a chewing gum composition according to an embodiment of the invention, reference is made to H.P. Fiedler, Lexikon der Hilfstoffe fur Pharmacie, Kosmetik und Angrenzende Gebiete, pages 63-64 (1981) and the lists of approved food emulsifiers of the individual countries. Anionic, cationic, amphoteric or non-ionic solubilizers can be used. Suitable solubilizers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilizers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubilizer may either be a single compound or a combination of several compounds. In the presence of an active ingredient, the chewing gum may preferably also comprise a carrier known in the art.

Emulsifiers, which are used as softeners may include tallow, hydrogenated tallow, hydrogenated and partially hydrogenated vegetable oils, cocoa butter, glycerol monostearate, glycerol triacetate, lecithin, mono-, di-and triglycerides, acetylated monoglycerides, fatty acids (e.g. stearic, palmitic, oleic and linoleic acids), and combinations thereof.

According to an embodiment of the invention, the chewing gum may comprise a pharmaceutically, cosmetically or biologically active substance. Examples of such active substances, a comprehensive list of which is found e.g. in WO 00/25598, which is incorporated herein by reference,

The active agents to be used in some embodiments may be any substance desired to be released from the chewing gum. If an accelerated rate of release is desired, corresponding to the effect obtained for the flavor, the primary substances are those with limited water solubility, typically below 10g /100 ml including substances which are entirely water insoluble. Examples are medicines, dietary supplements, oral compositions, anti-smoking agents, highly potent sweeteners, pH adjusting agents, etc.

Further examples of active ingredients include paracetamol, benzocaine, cinnarizine, menthol, carvone, caffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active component from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutritients accepted by the authorities in different countries such as for instance U.S. code of Federal Regulations, Title 21, Section 182.5013.182 5997 and 182.8013-182.8997, the contents of which are incorporated herein by reference for all purposes.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminum salts, (for instance aluminum potassium sulfate AlK (S0₄) 2, 12H₂0) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

For additional compounds, see J. Dent. Res. Vol. 28 No. 2, page 160-171,1949, wherein a wide range of tested compounds are mentioned, the contents of which are incorporated herein by reference for all purposes.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance:
nicotine, tobacco powder or silver salts, for instance silver acetate, silver carbonate and silver nitrate.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folin acid, niacin, Pantothene acid, biotine, C, D, E, K.

Minerals include Calcium, phosphor, magnesium, iron, Zink, Cupper, lod, Mangan, Crom, Selene, Molybden. Other active ingredients include:Q10@, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

Active ingredients may comprise the below-mentioned compounds or derivates thereof but are not limited thereto: Acetaminophen, Acetylsalicylic acid Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminumaminoacetat, Cimetidine, Esomeprazole, Famotidine, Lansoprazole, Magnesiumoxide, Nizatide and or Ratinidine.

In an embodiment of the invention, the flavor may be used as taste masking in chewing gum comprising active ingredients, which by themselves have undesired taste or which alter the taste of the formulation.

The chewing gum may optionally contain usual additives, such as binding agents, acidulants, fillers, coloring agents, preservatives, and antioxidants.

Materials to be used for the above-mentioned encapsulation methods for sweeteners might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

In general, chewing gum may be manufactured by sequentially adding the various chewing gum ingredients to a commercially available mixer known in the art.

A mixing of chewing gum and gum base may generally be performed by a batch or a continuous processing technique. An example of basic applicable mixing principles is explained below.

After the initial ingredients have been thoroughly mixed, the chewing gum mass is discharged from the mixer and shaped into the desired form such as by rolling into sheets and cutting into sticks, extruded into chunks or casting into pellets.

Generally, the ingredients may be mixed by first melting the gum base and adding it to the running mixer. Colors, active agents and/or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor has been added.

The entire mixing procedure typically takes from five to fifteen min, but longer mixing times may sometimes be required. Those skilled in the art will recognize that many variations of the above described procedure may be followed. Including the one-step method described in US patent application 2004/0115305 hereby incorporated as reference.

The final chewing gums are formed by extrusion, compression, rolling and may be centre filled with liquids and/or solids in any form.

In some embodiments the chewing gum may be formed as conventional pellets, centre filled, slabs, sticks, tape, beads, powders, etc.

A centre filled chewing gum may e.g. be made according to US patent 4,683,138, hereby incorporated by reference.

In some embodiments the chewing gum may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugar free soft coating e.g. comprising alternately applying to the centres a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid.

A coated chewing gum center according to the invention may have any form, shape or dimension that permits the chewing gum center to be coated using any conventional coating process.

In some embodiments the gum centre of coated chewing gum elements can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere, and typically the weight of a gum center may be 0.2 to 8 grams, preferably between 0.5 to 5 grams.

Note that the description, and specifically the claims, designates e.g. 1000 as 1,000 and ½ as 0.5.

The following non-limiting examples illustrate the manufacturing of a chewing gum according to the invention.

Chewing gums were made according to the formulations of example 1 and 2 according to the batch process shown in example 3.

### EXAMPLE 1

### Gum base formulations:

**Table 1**

| Raw materials, % | Comparative base 001 | Base 002 |
|---|---|---|
| Conventional high molecular weight elastomer | 8 | |
| SIS elastomer | | 8 |
| Medium molecular weight elastomer | 7 | 7 |
| Natural Resin | 20 | 20 |
| PVA | 20 | 20 |
| Filler | 20 | 20 |
| Emulsifier | 5 | 5 |
| Fat | 20 | 20 |

The applied gum base formulations were provided according to the values in table 1. The comparative gum base 001 is a conventional gum base comprising a conventional high molecular weight elastomer butyl rubber with Mw of about 350,000 g/mol. The SIS elastomer applied in gum base 002 is D1107P from Kraton™ polymers, which has an estimated Mw of about 200,000 g/mol. Equivalents of D1107P may be used as well.

### EXAMPLE 2

### Chewing gum formulations

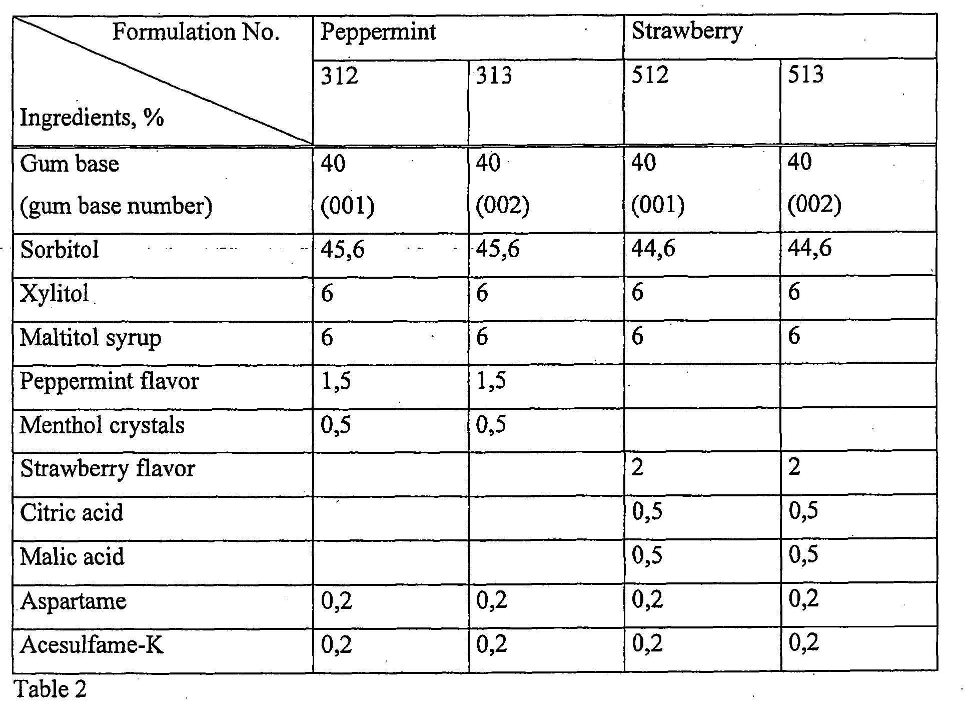

The applied chewing gum formulations are provided according to the values in table 2. References are made to a peppermint formulation and a strawberry formulation, each of these are shown above in table 2. Both a peppermint chewing gum and a strawberry chewing gum are made from the respective gum bases 001 and 002 in example 1 resulting in a total of four different chewing gums: 312, 313, 512 and 513. Hence, later on the four different chewing gums may be referred to as conventional chewing gum with peppermint flavor (CP), conventional chewing gum with strawberry flavor (CS), chewing gum with peppermint flavor according to the invention (IP) and chewing gum with strawberry flavor according to the invention (IS). The process of providing the chewing gums in table 2 is disclosed below as a two step batch mixing process in example 3 and a continuous mixing process in example 4.

### EXAMPLE 3

### Batch mixing

### Batch mixing of gum base:

Two gum bases for chewing gum were manufactured according to the formulation provided in example 1.

Two gum bases, comparative base 001 and base 002 were provided according to the following process. The gum bases were made in a batch mixer provided with mixing means like e.g. horizontally placed Z-shaped arms. The mixer had been preheated for 15 min to a temperature of about 100-120°C. In gum base 001, a high Mw elastomer, filler and half of the PVA are added and mixed for 25 min. The remaining part of the PVA is added and mixed for another 5 min. Then the natural resin is added and mixed for another 10 min. The medium Mw elastomer is added and mixed for 10 min and finally the fat and emulsifier are slowly added and mixed for another 20 min.

In gum base 002, the SIS elastomer, filler and half of the PVA are added and mixed for 25 min. The remaining part of the PVA is added and mixed for another 5 min. The natural resin is then added and mixed for another 10 min. The medium Mw elastomer is added and mixed for 10 min and finally the fat and emulsifier is slowly added and mixed for another 20 min.

In other words, the only difference between the two provided gum bases relies on the different use of elastomer, i.e. the conventional high Mw elastomer and SIS.

### Batch mixing of Chewing Gum:

Four chewing gums were manufactured according to the formulation provided in table 2 of example 2. The chewing gum products were prepared as follows:

Four batches, two based on base 002 comprising SIS and two based on the comparative base 001 comprising conventional high Mw elastomer, were made in a batch mixer provided with mixing means like e.g. horizontally placed Z-shaped arms. The mixer had been preheated for 15 min to a temperature of about 40-60°C or the chewing gum was made in one step, immediately after preparation of gum base in the same mixer where the gum base and mixer had a temperature of less than 60°C.

One half portion of the sorbitol was added together with the gum base and mixed for about 6 min. Maltitol syrup was added and mixed well for about 3 min. The remaining half portion of sorbitol was added and mixed for 1 minute, and then the xylitol was added and mixed for about 4 min.

To two batches, one SIS based - base 002, and one based on conventional high Mw elastomer - base 001, were then added peppermint flavor and menthol to provide peppermint chewing gums, one conventional high Mw elastomer based peppermint chewing gum 512 and one SIS based chewing gum 513. The flavor and menthol were added to the mixer and mixed for about 4 min. Then aspartame and acesulfame were added to the mixer and mixed for 2 min. The resulting gum mixture was then discharged and e.g. transferred to a pan at a temperature of 40-48 °C. The gum was then rolled and scored into cores, sticks, balls, cubes or any other desired shape, optionally followed by coating and polishing processes prior to packaging.

To two further batches, one SIS based - base 002, and one based on conventional high Mw elastomer - base 001 were then added strawberry flavor, malic acid and citric acid to provide strawberry chewing gums, one conventional high Mw elastomer based strawberry chewing gum 312 and one SIS based chewing gum 313. The flavor and the acids were added to the mixer and mixed for about 4 min. Then aspartame and acesulfame were added to the mixer and mixed for 2 min. The resulting gum mixture was then discharged and e.g. transferred to a pan at a temperature of 40-48 °C. The gum was then rolled and scored into cores, sticks, balls, cubes or any other desired shape, optionally followed by coating and polishing processes prior to packaging.

### EXAMPLE 4

### Continuous mixing

### Continuous mixing of gum base:

Continuous mixing may be performed as described in US 6, 630,182, incorporated hereinafter by reference.
An extruder apparatus, e.g. a Leistritz co-rotational twin screw mixing extruder, is used for the continuous mixing of chewing gum. The extruder is divided into 10 barrels/heating zones and the screw design is optimized by proper combination of various screw elements including conveying elements, reverse conveying elements, kneading discs and blocks, and mixing elements. For a further detailed description see e.g. US 6,630,182 column 4. The mixing speed is 80-120 rpm and gravitational (loss in weight) feeders are used.
The 10 barrels have individual purposes as listed below:
Barrel 1. Adding of high Mw elastomer/SIS, filler and half the PVA, T = 25°C
Barrel 2+3. Mixing and kneading, T = 80°C
Barrel 4. Adding rest of PVA and natural resin using a side feeder, T = 120°C
Barrel 5. Mixing, T = 120°C
Barrel 6. Adding medium Mw elastomer, T = 120°C
Barrel 7. Adding solid fat and emulsifier using a side feeder, T = 120°C
Barrel 8. Adding liquid fat, T = 120°C
Barrel 9+10. Mixing, T = 120°C

Following the mixing process the gum base product is discharged to form a slab. Alternatively, the finished gum base can be run through a pelletizing system.

### Continuous mixing of Chewing Gum:

An extruder apparatus, e.g. a Leistritz co-rotational twin screw mixing extruder, is used for the continuous mixing of chewing gum. The extruder is divided into 10 barrels/heating zones and the screw design is optimized by proper combination of various screw elements including conveying elements, reverse conveying elements, kneading discs and blocks, and mixing elements. For a further detailed description see e.g. US 6,630,182 column 4. The mixing speed is 80-120 rpm and gravitational (loss in weight) feeders are used.
The 10 barrels have individual purposes as listed below:
Barrel 1. Adding gum base and half the sorbitol, T = 25°C
Barrel 2+3. Mixing and kneading, T = 40°C
Barrel 4. Adding rest of sorbitol using a side feeder, T = 40°C
Barrel 5. Mixing, T = 40°C
Barrel 6. Adding maltitol syrup, T = 40°C
Barrel 7. Adding xylitol, aspartame, acesulfame in addition to menthol (peppermint gum) or malic acid and citric acid (strawberry gum) using a side feeder, T = 40°C
Barrel 8. Adding flavor (peppermint/strawberry), T = 40°C
Barrel 9+10. Mixing, T = 40°C

Following the mixing process the chewing gum product is discharged to be rolled, scored etc.

### EXAMPLE 5

### Evaluation of example 2

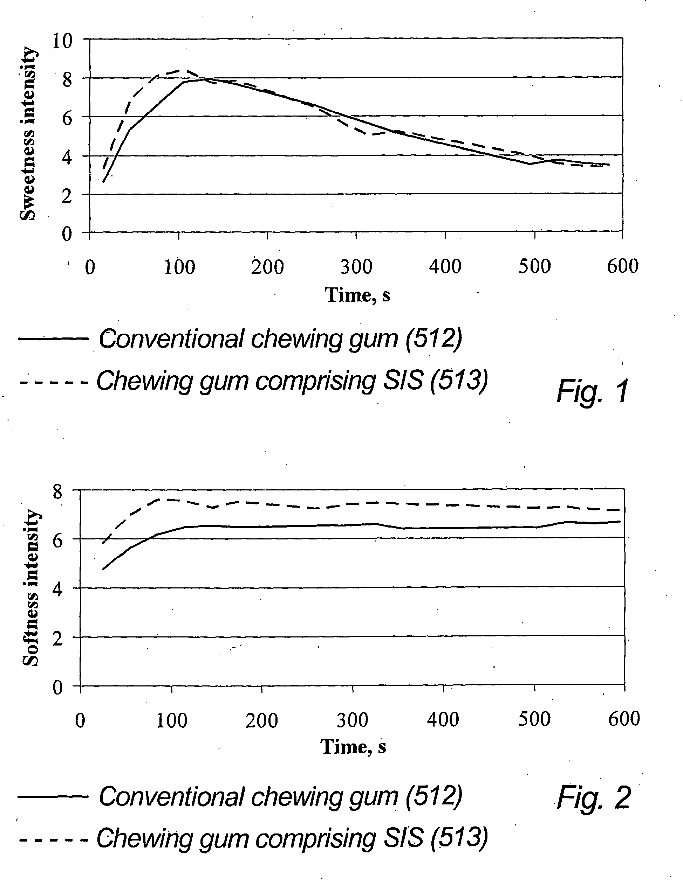

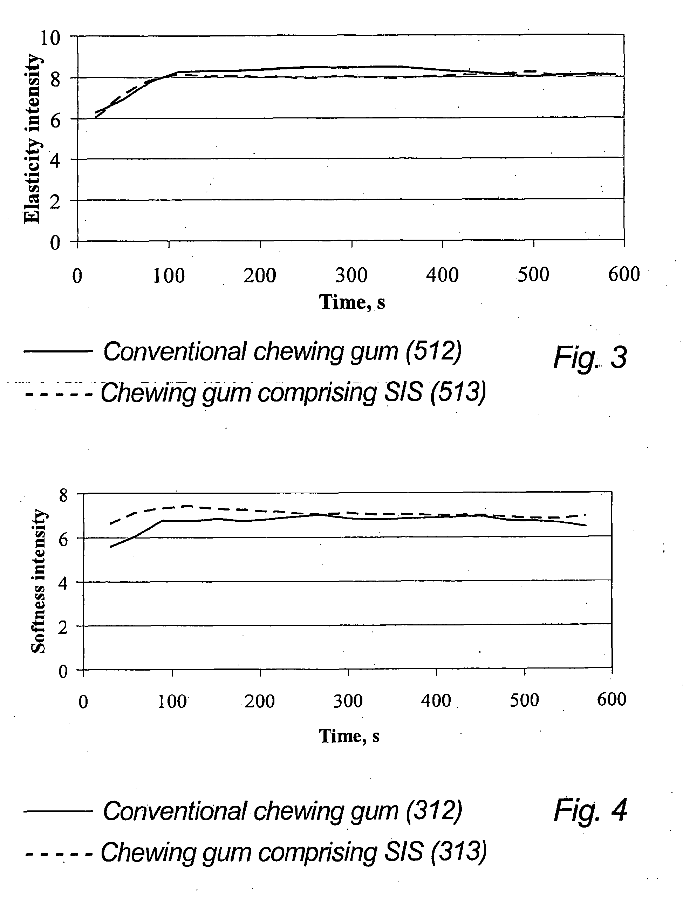

The chewing gums of example 2 were tested by a time-intensity sensory evaluation for different characteristics, mostly concerning texture and release abilities. Figs. 1 to 3 illustrate characteristics for CS and IS and figs. 4-6 illustrate characteristics for CP and IP.

The sweetness intensity measured in fig. 1 shows an improved sweetness of IS over the CS in the initial part of the curve. In the remaining part of the curve the sweetness intensity is generally the same for IS and CS.

IS and CS are evaluated for their softness intensity in fig. 2. An improvement is seen during the total chewing process of 600 seconds for IS in comparison to CS.

IS and CS are evaluated for their elasticity intensity in fig. 3. The elasticity of the chewing gums IS and CS was determined to be comparable.

Summing up we have seen, that by using SIS, a softer product is obtained without loss of elasticity while at least maintaining the release of sweetener.

Fig. 4 illustrates the softness intensity for CP and IP. A minor improvement is seen in IP in the beginning turning over to a curve almost identical to the CP-curve.

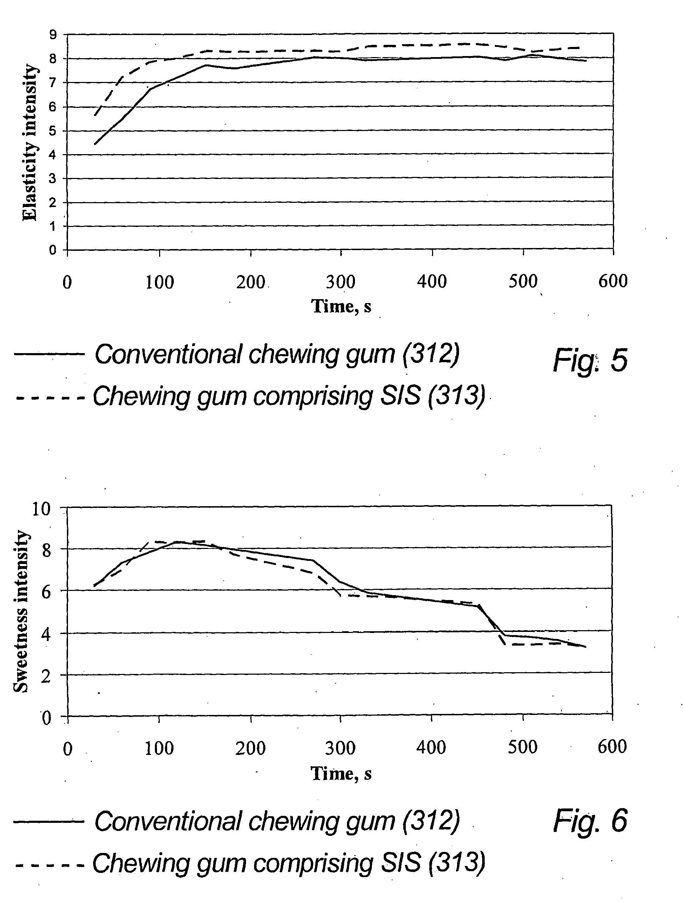

Fig. 5 illustrates the elasticity intensity for CP and IP. An improvement in the elasticity is seen over the whole evaluation range of 600 seconds.

Fig. 6 illustrates the sweetness intensity for CP and IP which is similar to fig. 1 except for a change in flavor. The two illustrated curves have intensities that are generally comparable.

Summing up we have seen, that a significantly improved elasticity is obtained while at least maintaining the sweetness and softness.

### EXAMPLE 6

### Evaluation of example 4.

The continuous processing method of gum base and chewing gum containing SIS explained according to example 4 showed very advantageous properties when compared to a continuous mixing of gum base and chewing gum based on conventional high Mw elastomers. In particular, it was noted that the process was far easier to control when applying SIS instead of e.g. high molecular weight elastomers such as PIB, SBR or butyl rubber.

Thus, the process appeared very advantageous when compared to continuous mixing involving conventional high Mw elastomers such as high Mw PIB or butyl rubber which may be very hard to feed at a constant rate through the available feed-channels of the mixer. This is due to the significant cold-flow properties of conventional high Mw elastomers which may cause caking of the elastomer granules in the feed tank and which may, unless carefully controlled, end up with blocking the feed-channel(s) of the mixer. Conversely, SIS elastomers may be prepared as free flowing granules suitable for continuous feeding.

### EXAMPLE 7

Chewing gum granules made on the basis of the gum base 002 of example 1 or chewing gum made on the basis of base 002 have been evaluated with respect to the ability to be processed and granulated for subsequent tabletting under pressure.

It was determined that chewing gums manufactured from gum base 002 had advantageous properties with respect to granulation. Moreover, it was noted that the obtained granules were suitable for feeding into a tabletting machine. Furthermore, it was noted that the obtained granules appeared relatively stable in relation to e.g. cold-flow properties when compared to granules containing conventional high Mw elastomers, e.g. high Mw PIB or butyl rubber.

## Claims

1. A chewing gum comprising at least one styrene-isoprene-styrene copolymer (SIS) in an amount from 0.1 % to 70 % by weight of said chewing gum.

2. A chewing gum according to claim 1, wherein the chewing gum comprises SIS in an amount from 0.1 % to 30 % by weight of said chewing gum.

3. A chewing gum according to claim 1 or 2, wherein the chewing gum comprises SIS in an amount from 0.1 % to 15 % by weight of said chewing gum.

4. A chewing gum according to any of the claims 1-3, wherein the chewing gum comprises SIS in an amount from 0.1 % to 10 % by weight of said chewing gum.

5. A chewing gum according to any of the claims 1-4, wherein the SIS copolymer is elastomeric.

6. A chewing gum according to any of the claims 1-5, wherein the chewing gum further comprises at least one di-block styrene-isoprene copolymer.

7. A chewing gum according to any of the claims 1-6, wherein the chewing gum further comprises at least one di-block styrene-isoprene copolymer as the sole plasticizer.

8. A chewing gum according to any of the claims 1-7, wherein the ratio of said di-block copolymer to SIS block copolymer is less than 60 to 40.

9. A chewing gum according to any of the claims 1-8, wherein the ratio of said di-block copolymer to tri-block polymer is less than 40 to 60.

10. A chewing gum according to any of the claims 1-9, wherein the styrene/isoprene ratio of said SIS is between 2/98 and 85/15.

11. A chewing gum according to any of the claims 1-10, wherein the styrene/isoprene ratio of said SIS is between 5/95 and 85/15.

12. A chewing gum according to any of the claims 1-11, wherein the styrene/isoprene ratio of said SIS is between 10/90 and 75/25.

13. A chewing gum according to any of the claims 1-12, wherein the styrene/isoprene ratio of said SIS is between 15/85 and 40/60.

14. A chewing gum according to any of the claims 1-13, wherein the styrene/isoprene ratio of said SIS is less than 15/85.

15. A chewing gum according to any of the claims 1-14, wherein the styrene/isoprene ratio of said SIS is between 15/85 and 75/25.

16. A chewing gum according to any of the claims 1-15, wherein the styrene/isoprene ratio of said SIS is between 15/85 and 75/25.

17. A chewing gum according to any of the claims 1-16, wherein said SIS has a molecular weight (Mw) of 50,000 to 1,000,000 g/mol.

18. A chewing gum according to any of the claims 1-17, wherein said SIS has a molecular weight (Mw) of 100,000 to 500,000 g/mol.

19. A chewing gum according to any of the claims 1-18, wherein the chewing gum comprises resin selected from the group consisting of synthetic and natural resin, or any combination thereof in an amount of 1 to 50% of said chewing gum.

20. A chewing gum according to any of the claims 1-19, wherein the chewing gum comprises resin selected from the group consisting of synthetic and natural resin, or any combination thereof in an amount of 3 to 25% of said chewing gum.

21. A chewing gum according to any of the claims 1-20, wherein the chewing gum comprises synthetic and/or natural resin in an amount of 5 to 20% of said chewing gum.

22. A chewing gum according to any of the claims 1-21, wherein the synthetic resin is PVA or terpene resins or any combination thereof.

23. A chewing gum according to any of the claims 1-22, wherein the natural resin is ester gum.

24. A chewing gum according to any of the claims 1-23, wherein the synthetic and/or natural resins have a molecular weight Mn of 500 to 200000 g/mol.

25. A chewing gum according to any of the claims 1-24, wherein the synthetic and/or natural resin have a molecular weight Mn of 500 to 50000 g/mol.

26. A chewing gum according to any of the claims 1-25, wherein the chewing gum comprises a mixture of synthetic and/or natural resins in a ratio between 1:20 and 20:1.

27. A chewing gum according to any of the claims 1-26, wherein the chewing gum comprises synthetic and/or natural elastomers in an amount of less than 30% of said chewing gum, preferably less than 20% of said chewing gum.

28. A chewing gum according to any of the claims 1-27, wherein the chewing gum comprises synthetic and/or natural elastomers in an amount of less than 15% of said chewing gum, preferably less than 10% of said chewing gum.

29. A chewing gum according to any of the claims 1-28, wherein the chewing gum comprises synthetic and/or natural elastomers in an amount of 2 to 30 % of said chewing gum.

30. A chewing gum according to any of the claims 1-29, wherein the chewing gum comprises synthetic and/or natural elastomers in an amount of 3 to 25 % of said chewing gum.

31. A chewing gum according to any of the claims 1-30, wherein the chewing gum comprises bulk sweetener in an amount from 0.5% to 95% of said chewing gum

32. A chewing gum according to any of the claims 1-31, wherein the chewing gum comprises bulk sweetener in an amount from 20% to 70% of said chewing gum.

33. A chewing gum according to any of the claims 1-32, wherein the chewing gum comprises bulk sweetener in an amount from 25% to 65% of said chewing gum.

34. A chewing gum according to any of the claims 1-33, wherein the chewing gum comprises one or more flavoring agents.

35. A chewing gum according to any of the claims 1-34, wherein the chewing gum comprises SIS in combination with one or more hydrophilic flavors.

36. A chewing gum according to any of the claims 1-35, wherein the chewing gum comprises SIS in combination with one or more hydrophobic flavors.

37. A chewing gum according to any of the claims 1-36, wherein the chewing gum further comprises one or more active ingredients.

38. A chewing gum according to any of the claims 1-37, wherein the chewing gum comprises high intensity sweetener in an amount of less than 2 % of said chewing gum.

39. A chewing gum according to any of the claims 1-38, wherein the chewing gum is provided with coating.

40. A chewing gum according to any of the claims 1-39, wherein the coating is selected from the group consisting of hard coating, soft coating and edible film-coating.

41. A chewing gum according to any of the claims 1-40, wherein the chewing gum comprises coating in an amount of 0.1 to 95 percent by weight of a coated chewing gum piece.

42. A chewing gum according to any of the claims 1-41, wherein the chewing gum comprises coating in an amount of 0.1 to 75 percent by weight of a coated chewing gum piece.

43. A chewing gum according to any of the claims 1-42, wherein the chewing gum comprises from 0 to 50% by weight of the chewing gum of filler, preferably 5-20% by weight of the chewing gum.

44. A chewing gum according to any of the claims 1-43, wherein the chewing gum is center-filled.

45. A chewing gum according to any of the claims 1-44, wherein the chewing gum is a compressed chewing gum made by tabletting.

46. A chewing gum according to any of the claims 1-45, wherein the chewing gum comprises SIS in combination with one or more additional hydrophilic ingredients.

47. A chewing gum according to any of the claims 1-46, wherein the chewing gum comprises SIS in combination with one or more additional hydrophobic ingredients.

48. A chewing gum according to any of the claims 1-47, wherein the chewing gum comprises biodegradable elastomers and resins.

49. A chewing gum according to any of the claims 1-48, wherein the chewing gum comprises one or more cooling agents.

50. A chewing gum according to any of the claims 1-48, wherein the chewing gum comprises one or more warming agents.

51. A chewing gum according to any of the claims 1-50 wherein the chewing gum further comprises the at least one di-block styrene-isoprene copolymer in an amount of less than 50 % by weight of the chewing gum.

52. A chewing gum according to any of the claims 1-50 wherein the chewing gum further comprises the at least one di-block styrene-isoprene copolymer in an amount of less than 10 % by weight of said chewing gum.

53. A chewing gum according to any of the claims 1-52 wherein the chewing gum further comprises at least one polymer having a molecular weight (Mw) of 50,000 to 1,000,000 g/mol in an amount of less than 20 % by weight of the chewing gum.

54. A chewing gum according to any of the claims 1-52 wherein chewing gum further comprises at least one polymer having a molecular weight (Mw) of 100,000 to 1,000,000 g/mol in an amount of less than 20 % by weight of the chewing gum.

55. A gum base comprising at least one styrene-isoprene-styrene copolymer (SIS) in an amount from 0.1 % to 99 % by weight of the gum base.

56. A gum base according to claim 55, wherein the gum base comprises SIS in an amount from 0.1 % to 75 % by weight of the gum base.

57. A gum base according to claim 55 or 56, wherein the gum base comprises SIS in an amount from 0.1 % to 50 % by weight of the gum base.

58. A gum base according to any of the claims 55-57, wherein the gum base comprises SIS in an amount from 0.1 % to 30 % by weight of the gum base.

59. A gum base according to any of the claims 55-58, wherein the SIS copolymer is elastomeric.

60. A gum base according to any of the claims 55-59, wherein the gum base further comprises at least one di-block styrene-isoprene copolymer

61. A gum base according to any of the claims 55-60, wherein the gum base further comprises at least one di-block styrene-isoprene copolymer as the sole plasticizer.

62. A gum base gum according to any of the claims 55-61, wherein the ratio of the di-block copolymer to SIS block copolymer is less than 60 to 40.

63. A gum base according to any of the claims 55-62, wherein the styrene/isoprene ratio of the SIS is between 2/98 and 85/15.

64. A gum base according to any of the claims 55-63, wherein the SIS has a molecular weight (Mw) of 50,000 to 1,000,000 g/mol.

65. A gum base according to any of the claims 55-63, wherein the SIS has a molecular weight (Mw) of 100,000 to 500,000 g/mol.

66. A gum base according to any of the claims 55-65, wherein the gum base comprises synthetic and/or natural resin in an amount of 1 to 95% of the gum base.

67. A gum base according to any of the claims 55-66, wherein the gum base comprises synthetic and/or natural resin in an amount of 3 to 70% of the gum base.

68. A gum base according to any of the claims 55-67, wherein the gum base comprises synthetic and/or natural resin in an amount of 5 to 55% of the gum base.

69. A gum base according to any of the claims 55-68, wherein the gum base comprises filler.

70. A gum base according to any of the claims 55-69, wherein the gum base is granulated.

71. A gum base according to any of the claims 55-70, wherein the gum base is in powder form.

72. A chewing gum according to any of the claims 1-54, wherein the chewing gum is granulated.

73. A chewing gum according to any of the claims 1-54, wherein the chewing gum is in powder form.

74. Method of manufacturing chewing gum granules for tabletting, the method comprising the steps of providing a chewing gum substance according to any of the claims 1-54 and granulating the substance into chewing gum granules.

## Patentansprüche

1. Kaugummi, welcher mindestens ein Styrol-Isopren-Styrol-Copolymer (SIS) in einer Menge von 0,1 % bis 70%, bezogen auf das Gewicht des Kaugummis, umfasst.

2. Kaugummi nach Anspruch 1, wobei der Kaugummi SIS in einer Menge von 0,1% bis 30%, bezogen auf das Gewicht des Kaugummis, umfasst.

3. Kaugummi nach Anspruch 1 oder 2, wobei der Kaugummi SIS in einer Menge von 0,1% bis 15%, bezogen auf das Gewicht des Kaugummis, umfasst.

4. Kaugummi nach einem der Ansprüche 1-3, wobei der Kaugummi SIS in einer Menge von 0, 1 % bis 10%, bezogen auf das Gewicht des Kaugummis, umfasst.

5. Kaugummi nach einem der Ansprüche 1-4, wobei das SIS-Copolymer elastomer ist.

6. Kaugummi nach einem der Ansprüche 1-5, wobei der Kaugummi des Weiteren mindestens ein Diblock-Styrol-Isopren-Copolymer umfasst.

7. Kaugummi nach einem der Ansprüche 1-6, wobei der Kaugummi des Weiteren mindestens ein Diblock-Styrol-Isopren-Copolymer als einzigen Weichmacher umfasst.

8. Kaugummi nach einem der Ansprüche 1-7, wobei das Verhältnis des Diblockcopolymers zu SIS-Blockcopolymer geringer als 60 zu 40 ist.

9. Kaugummi nach einem der Ansprüche 1-8, wobei das Verhältnis des Diblockcopolymers zu Triblockpolymer geringer als 40 zu 60 ist.

10. Kaugummi nach einem der Ansprüche 1-9, wobei das Styrol/Isopren-Verhältnis des SIS zwischen 2/98 und 85/15 liegt.

11. Kaugummi nach einem der Ansprüche 1-10, wobei das Styrol/lsopren-Verhältnis des SIS zwischen 5/95 und 85/15 liegt.

12. Kaugummi nach einem der Ansprüche 1-11, wobei das Styrol/Isopren-Verhältnis des SIS zwischen 10/90 und 75/25 liegt.

13. Kaugummi nach einem der Ansprüche 1-12, wobei das Styrol/Isopren-Verhältnis des SIS zwischen 15/85 und 40/60 liegt.

14. Kaugummi nach einem der Ansprüche 1-13, wobei das Styrol/Isopren-Verhältnis des SIS geringer als 15/85 ist.

15. Kaugummi nach einem der Ansprüche 1-14, wobei das Styrol/Isopren-Verhältnis des SIS zwischen 15/85 und 75/25 liegt.

16. Kaugummi nach einem der Ansprüche 1-15, wobei das Styrol/Isopren-Verhältnis des SIS zwischen 15/85 und 75/25 liegt.

17. Kaugummi nach einem der Ansprüche 1-16, wobei das SIS ein Molekulargewicht (Mw) von 50.000 bis 1.000.000 g/mol aufweist.

18. Kaugummi nach einem der Ansprüche 1-17, wobei das SIS ein Molekulargewicht (Mw) von 100.000 bis 500.000 g/mol aufweist.

19. Kaugummi nach einem der Ansprüche 1-18, wobei der Kaugummi Harz, das aus der Gruppe bestehend aus synthetischen und natürlichen Harzen oder einer jeglichen Kombination ausgewählt ist, in einer Menge von 1 bis 50% des Kaugummis umfasst.

20. Kaugummi nach einem der Ansprüche 1-19, wobei der Kaugummi Harz, das aus der Gruppe bestehend aus synthetischen und natürlichen Harzen oder einer jeglichen Kombination ausgewählt ist, in einer Menge von 3 bis 25% des Kaugummis umfasst.

21. Kaugummi nach einem der Ansprüche 1-20, wobei der Kaugummi synthetisches und/oder natürliches Harz in einer Menge von 5 bis 20% des Kaugummis umfasst.

22. Kaugummi nach einem der Ansprüche 1-21, wobei das synthetische Harz PVA oder Terpenharze oder eine jegliche Kombination davon ist.

23. Kaugummi nach einem der Ansprüche 1-22, wobei das natürliche Harz Esterharz ist.

24. Kaugummi nach einem der Ansprüche 1-23, wobei die synthetischen und/oder natürlichen Harze ein Molekulargewicht Mn von 500 bis 200.000 g/mol aufweisen.

25. Kaugummi nach einem der Ansprüche 1-24, wobei die synthetischen und/oder natürlichen Harze ein Molekulargewicht Mn von 500 bis 50.000 g/mol aufweisen.

26. Kaugummi nach einem der Ansprüche 1-25, wobei der Kaugummi eine Mischung von synthetischen und/oder natürlichen Harzen in einem Verhältnis zwischen 1:20 und 20:1 umfasst.

27. Kaugummi nach einem der Ansprüche 1-26, wobei der Kaugummi synthetische und/oder natürliche Elastomere in einer Menge unter 30% des Kaugummis, vorzugsweise unter 20% des Kaugummis umfasst.

28. Kaugummi nach einem der Ansprüche 1-27, wobei der Kaugummi synthetische und/oder natürliche Elastomere in einer Menge unter 15% des Kaugummis, vorzugsweise unter 10% des Kaugummis umfasst.

29. Kaugummi nach einem der Ansprüche 1-28, wobei der Kaugummi synthetische und/oder natürliche Elastomere in einer Menge von 2 bis 30% des Kaugummis umfasst.

30. Kaugummi nach einem der Ansprüche 1-29, wobei der Kaugummi synthetische und/oder natürliche Elastomere in einer Menge von 3 bis 25% des Kaugummis umfasst.

31. Kaugummi nach einem der Ansprüche 1-30, wobei der Kaugummi Füllsüßstoff in einer Menge von 0,5% bis 95% des Kaugummis umfasst.

32. Kaugummi nach einem der Ansprüche 1-31, wobei der Kaugummi Füllsüßstoff in einer Menge von 20% bis 70% des Kaugummis umfasst.

33. Kaugummi nach einem der Ansprüche 1-32, wobei der Kaugummi Füllsüßungsstoff in einer Menge von 25% bis 65% des Kaugummis umfasst.

34. Kaugummi nach einem der Ansprüche 1-33, wobei der Kaugummi einen oder mehrere Geschmacks- oder Aromastoff(e) umfasst.

35. Kaugummi nach einem der Ansprüche 1-34, wobei der Kaugummi SIS in Kombination mit einem oder mehreren hydrophilen Geschmacks- oder Aromastoff(en) umfasst.

36. Kaugummi nach einem der Ansprüche 1-35, wobei der Kaugummi SIS in Kombination mit einem oder mehreren hydrophoben Geschmacks- oder Aromastoff(en) umfasst.

37. Kaugummi nach einem der Ansprüche 1-36, wobei der Kaugummi des Weiteren einen oder mehrere Wirkstoffe umfasst.

38. Kaugummi nach einem der Ansprüche 1-37, wobei der Kaugummi hochintensives Süßungsmittel in einer Menge unter 2% des Kaugummis umfasst.

39. Kaugummi nach einem der Ansprüche 1-38, wobei der Kaugummi mit einem Überzug versehen ist.

40. Kaugummi nach einem der Ansprüche 1-39, wobei der Überzug aus der Gruppe bestehend aus harten Überzügen, weichen Überzügen und essbaren Filmüberzügen ausgewählt ist.

41. Kaugummi nach einem der Ansprüche 1-40, wobei der Kaugummi Überzug in einer Menge von 0,1 bis 95%, bezogen auf das Gewicht eines überzogenen Kaugummistücks, umfasst.

42. Kaugummi nach einem der Ansprüche 1-41, wobei der Kaugummi Überzug in einer Menge von 0,1 bis 75%, bezogen auf das Gewicht eines überzogenen Kaugummistücks, umfasst.

43. Kaugummi nach einem der Ansprüche 1-42, wobei der Kaugummi 0 bis 50% bezogen auf das Gewicht des Kaugummis an Füllstoff, vorzugsweise 5-20%, bezogen auf das Gewicht des Kaugummis, umfasst.

44. Kaugummi nach einem der Ansprüche 1-43, wobei der Kaugummi im Zentrum gefüllt ist.

45. Kaugummi nach einem der Ansprüche 1-44, wobei der Kaugummi ein durch Tablettieren hergestellter verdichteter Kaugummi ist.

46. Kaugummi nach einem der Ansprüche 1-45, wobei der Kaugummi SIS in Kombination mit einem oder mehreren zusätzlichen hydrophilen Bestandteil(en) umfasst.

47. Kaugummi nach einem der Ansprüche 1-46, wobei der Kaugummi SIS in Kombination mit einem oder mehreren zusätzlichen hydrophoben Bestandteil(en) umfasst.

48. Kaugummi nach einem der Ansprüche 1-47, wobei der Kaugummi biologisch abbaubare Elastomere und Harze umfasst.

49. Kaugummi nach einem der Ansprüche 1-48, wobei der Kaugummi ein oder mehrere kühlende Mittel umfasst.

50. Kaugummi nach einem der Ansprüche 1-48, wobei der Kaugummi ein oder mehrere wärmende Mittel umfasst.

51. Kaugummi nach einem der Ansprüche 1-50, wobei der Kaugummi des Weiteren das mindestens eine Diblock-Styrol-Isopren-Copolymer in einer Menge unter 50% bezogen auf das Gewicht des Kaugummis umfasst.

52. Kaugummi nach einem der Ansprüche 1-50, wobei der Kaugummi des Weiteren das mindestens eine Diblock-Styrol-Isopren-Copolymer in einer Menge unter 10%, bezogen auf das Gewicht des Kaugummis, umfasst.

53. Kaugummi nach einem der Ansprüche 1-52, wobei der Kaugummi des Weiteren mindestens ein Polymer mit einem Molekulargewicht (Mw) von 50.000 bis 1.000.000 g/mol in einer Menge unter 20%, bezogen auf das Gewicht des Kaugummis, umfasst.

54. Kaugummi nach einem der Ansprüche 1-52, wobei der Kaugummi des Weiteren mindestens ein Polymer mit einem Molekulargewicht (Mw) von 100.000 bis 1.000.000 g/mol in einer Menge unter 20%, bezogen auf das Gewicht des Kaugummis, umfasst.

55. Gummibasis, umfassend mindestens ein Styrol-Isopren-Styrol-Copolymer (SIS) in einer Menge von 0, 1 % bis 99%, bezogen auf das Gewicht der Gummibasis.

56. Gummibasis nach Anspruch 55, wobei die Gummibasis SIS in einer Menge von 0,1 % bis 75%, bezogen auf das Gewicht der Gummibasis, umfasst.

57. Gummibasis nach Anspruch 55 oder 56, wobei die Gummibasis SIS in einer Menge von 0,1 % bis 50%, bezogen auf das Gewicht der Gummibasis, umfasst.

58. Gummibasis nach einem der Ansprüche 55-57, wobei die Gummibasis SIS in einer Menge von 0,1% bis 30%, bezogen auf das Gewicht der Gummibasis, umfasst.

59. Gummibasis nach einem der Ansprüche 55-58, wobei das SIS-Copolymer elastomer ist.

60. Gummibasis nach einem der Ansprüche 55-59, wobei die Gummibasis des Weiteren mindestens ein Diblock-Styrol-Isopren-Copolymer umfasst.

61. Gummibasis nach einem der Ansprüche 55-60, wobei die Gummibasis des Weiteren mindestens ein Diblock-Styrol-Isopren-Copolymer als einzigen Weichmacher umfasst.

62. Gummibasis nach einem der Ansprüche 55-61, wobei das Verhältnis des Diblockcopolymers zu SIS-Blockcopolymer geringer als 60 zu 40 ist.

63. Gummibasis nach einem der Ansprüche 55-62, wobei das Styrol/Isopren-Verhältnis des SIS zwischen 2/98 und 85/15 liegt.

64. Gummibasis nach einem der Ansprüche 55-63, wobei das SIS ein Molekulargewicht (Mw) von 50.000 bis 1.000.000 g/mol aufweist.

65. Gummibasis nach einem der Ansprüche 55-63, wobei das SIS ein Molekulargewicht (Mw) von 100.000 bis 500.000 g/mol aufweist.

66. Gummibasis nach einem der Ansprüche 55-65, wobei die Gummibasis synthetisches und/oder natürliches Harz in einer Menge von 1 bis 95% der Gummibasis umfasst.

67. Gummibasis nach einem der Ansprüche 55-66, wobei die Gummibasis synthetisches und/oder natürliches Harz in einer Menge von 3 bis 70% der Gummibasis umfasst.

68. Gummibasis nach einem der Ansprüche 55-67, wobei die Gummibasis synthetisches und/oder natürliches Harz in einer Menge von 5 bis 55% der Gummibasis umfasst.

69. Gummibasis nach einem der Ansprüche 55-68, wobei die Gummibasis Füllstoff umfasst.

70. Gummibasis nach einem der Ansprüche 55-69, wobei die Gummibasis granuliert ist.

71. Gummibasis nach einem der Ansprüche 55-70, wobei die Gummibasis in Pulverform vorliegt.

72. Kaugummi nach einem der Ansprüche 1-54, wobei der Kaugummi granuliert ist.

73. Kaugummi nach einem der Ansprüche 1-54, wobei der Kaugummi in Pulverform vorliegt.

74. Verfahren zum Herstellen von Kaugummigranulat zum Tablettieren, wobei das Verfahren die Schritte des Bereitstellens einer Kaugummisubstanz nach einem der Ansprüche 1-54 und des Granulierens der Substanz zu Kaugummigranulat umfasst.

## Revendications

1. Chewing-gum comprenant au moins un copolymère de styrène-isoprène-styrène (SIS) dans une quantité de 0,1% à 70% en poids dudit chewing-gum.

2. Chewing-gum selon la revendication 1, dans lequel le chewing-gum comprend du SIS dans une quantité de 0,1% à 30% en poids dudit chewing-gum.

3. Chewing-gum selon la revendication 1 ou 2, dans lequel le chewing-gum comprend du SIS dans une quantité de 0,1 à 15% en poids dudit chewing-gum.

4. Chewing-gum selon l'une quelconque des revendications 1-3, dans lequel le chewing-gum comprend du SIS dans une quantité de 0,1 à 10% en poids dudit chewing-gum.

5. Chewing-gum selon l'une quelconque des revendications 1-4, dans lequel le copolymère SIS est élastomère.

6. Chewing-gum selon l'une quelconque des revendications 1-5, dans lequel le chewing-gum comprend en outre au moins un copolymère dibloc styrène-isoprène.

7. Chewing-gum selon l'une quelconque des revendications 1-6, dans lequel le chewing-gum comprend en outre au moins un copolymère dibloc styrène-isoprène comme seul plastifiant.

8. Chewing-gum selon l'une quelconque des revendications 1-7, dans lequel le rapport entre ledit copolymère dibloc et le copolymère bloc SIS est inférieur à 60 à 40.

9. Chewing-gum selon l'une quelconque des revendications 1-8, dans lequel le rapport entre ledit copolymère dibloc et le copolymère tribloc est inférieur à 40 à 60.

10. Chewing-gum selon l'une quelconque des revendications 1-9, dans lequel le rapport styrène/isoprène dudit SIS est compris entre 2/98 et 85/15.

11. Chewing-gum selon l'une quelconque des revendications 1-10, dans lequel le rapport styrène/isoprène dudit SIS est compris entre 5/95 et 85/15.

12. Chewing-gum selon l'une quelconque des revendications 1-11, dans lequel le rapport styrène/isoprène dudit SIS est compris entre 10/90 et 75/25.

13. Chewing-gum selon l'une quelconque des revendications 1-12, dans lequel le rapport styrène/isoprène dudit SIS est compris entre 15/85 et 40/60.

14. Chewing-gum selon l'une quelconque des revendications 1-13, dans lequel le rapport styrène/isoprène dudit SIS est inférieur à 15/85.

15. Chewing-gum selon l'une quelconque des revendications 1-14, dans lequel le rapport styrène/isoprène dudit SIS est compris entre 15/85 et 75/25.

16. Chewing-gum selon l'une quelconque des revendications 1-15, dans lequel le rapport styrène/isoprène dudit SIS est compris entre 15/85 et 75/25.

17. Chewing-gum selon l'une quelconque des revendications 1-16, dans lequel ledit SIS a une masse moléculaire (Mw) de 50 000 à 1 000 000 g/mol.

18. Chewing-gum selon l'une quelconque des revendications 1-17, dans lequel ledit SIS a une masse moléculaire (Mw) de 100 000 à 500 000 g/mol.

19. Chewing-gum selon l'une quelconque des revendications 1-18, dans lequel le chewing-gum comprend une résine choisie dans le groupe constituée de résine synthétique et naturelle, ou n'importe quelle combinaison correspondante, dans une quantité de 1 à 50% dudit chewing-gum.

20. Chewing-gum selon l'une quelconque des revendications 1-19, dans lequel le chewing-gum comprend de la résine choisie dans le groupe constitué de résine synthétique et naturelle, ou n'importe quelle combinaison correspondante, dans une quantité de 3 à 25% dudit chewing-gum.

21. Chewing-gum selon l'une quelconque des revendications 1-20, dans lequel le chewing-gum comprend une résine synthétique et/ou naturelle dans une quantité de 5 à 20% dudit chewing-gum.

22. Chewing-gum selon l'une quelconque des revendications 1-21, dans lequel la résine synthétique est du PVA ou des résines de terpène ou toute combinaison correspondante.

23. Chewing-gum selon l'une quelconque des revendications 1-22, dans lequel la résine naturelle est une gomme d'ester.

24. Chewing-gum selon l'une quelconque des revendications 1-23, dans lequel les résines synthétiques et/ou naturelles ont une masse moléculaire Mn de 500 à 200000 g/mol.

25. Chewing-gum selon l'une quelconque des revendications 1-24, dans lequel la résine synthétique et/ou naturelle a une masse moléculaire Mn de 500 à 50000 g/mol.

26. Chewing-gum selon l'une quelconque des revendications 1-25, dans lequel le chewing-gum comprend un mélange de résines synthétiques et/ou naturelles selon un rapport compris entre 1 :20 et 20 :1.

27. Chewing-gum selon l'une quelconque des revendications 1-26, dans lequel le chewing-gum comprend des élastomères synthétiques et/ou naturels dans une quantité inférieure à 30% dudit chewing-gum, de préférence inférieure à 20% dudit chewing-gum.

28. Chewing-gum selon l'une quelconque des revendications 1-27, dans lequel le chewing-gum comprend des élastomères synthétiques et/ou naturels dans une quantité inférieure à 15% dudit chewing-gum, de préférence inférieure à 10% dudit chewing-gum.

29. Chewing-gum selon l'une quelconque des revendications 1-28, dans lequel le chewing-gum comprend des élastomères synthétiques et/ou naturels dans une quantité de 2 à 30% dudit chewing-gum.

30. Chewing-gum selon l'une quelconque des revendications 1-29, dans lequel le chewing-gum comprend des élastomères synthétiques et/ou naturels dans une quantité de 3 à 25% dudit chewing-gum.

31. Chewing-gum selon l'une quelconque des revendications 1-30, dans lequel le chewing-gum comprend un édulcorant de charge dans une quantité de 0,5% à 95% dudit chewing-gum.

32. Chewing-gum selon l'une quelconque des revendications 1-31, dans lequel le chewing-gum comprend un édulcorant de charge dans une quantité de 20% à 70% dudit chewing-gum.

33. Chewing-gum selon l'une quelconque des revendications 1-32, dans lequel le chewing-gum comprend un édulcorant de charge dans une quantité de 25% à 65% dudit chewing-gum.

34. Chewing-gum selon l'une quelconque des revendications 1-33, dans lequel le chewing-gum comprend un ou plusieurs agents aromatisants.

35. Chewing-gum selon l'une quelconque des revendications 1-34, dans lequel le chewing-gum comprend du SIS en combinaison avec un ou plusieurs aromes hydrophiles.

36. Chewing-gum selon l'une quelconque des revendications 1-35, dans lequel le chewing-gum comprend du SIS en combinaison avec un ou plusieurs aromes hydrophobes.

37. Chewing-gum selon l'une quelconque des revendications 1-36, dans lequel le chewing-gum comprend en outre un ou plusieurs ingrédients actifs.

38. Chewing-gum selon l'une quelconque des revendications 1-37, dans lequel le chewing-gum comprend un édulcorant fortement intense dans une quantité inférieure à 2% dudit chewing-gum.

39. Chewing-gum selon l'une quelconque des revendications 1-38, dans lequel le chewing-gum est doté d'un revêtement.

40. Chewing-gum selon l'une quelconque des revendications 1-39, dans lequel le revêtement est choisi dans le groupe constitué d'un revêtement dur, un revêtement mou et un revêtement par pellicule comestible.

41. Chewing-gum selon l'une quelconque des revendications 1-40, dans lequel le chewing-gum comprend un revêtement dans une quantité de 0,1 à 95 pour cent en poids d'un morceau de chewing-gum revêtu.

42. Chewing-gum selon l'une quelconque des revendications 1-41, dans lequel le chewing-gum comprend un revêtement dans une quantité de 0,1 à 75 pour cent en poids d'un morceau de chewing-gum revêtu.

43. Chewing-gum selon l'une quelconque des revendications 1-42, dans lequel le chewing-gum comprend de 0 à 50% en poids du chewing-gum de charge, de préférence 5-20% en poids du chewing-gum.

44. Chewing-gum selon l'une quelconque des revendications 1-43, dans lequel le chewing-gum est rempli en son centre.

45. Chewing-gum selon l'une quelconque des revendications 1-44, dans lequel le chewing-gum est un chewing-gum comprimé réalisé par pastillage.

46. Chewing-gum selon l'une quelconque des revendications 1-45, dans lequel le chewing-gum comprend du SIS en combinaison avec un ou plusieurs ingrédients hydrophiles additionnels.

47. Chewing-gum selon l'une quelconque des revendications 1-46, dans lequel le chewing-gum comprend du SIS en combinaison avec un ou plusieurs ingrédients hydrophobes additionnels.

48. Chewing-gum selon l'une quelconque des revendications 1-47, dans lequel le chewing-gum comprend des élastomères et résines biodégradables.

49. Chewing-gum selon l'une quelconque des revendications 1-48, dans lequel le chewing-gum comprend un ou plusieurs agents refroidissants.

50. Chewing-gum selon l'une quelconque des revendications 1-48, dans lequel le chewing-gum comprend un ou plusieurs agents chauffants.

51. Chewing-gum selon l'une quelconque des revendications 1-50, dans lequel le chewing-gum comprend en outre ledit copolymère dibloc styrène-isoprène dans une quantité inférieure à 50% en poids dudit chewing-gum.

52. Chewing-gum selon l'une quelconque des revendications 1-50, dans lequel le chewing-gum comprend en outre ledit au moins un copolymère dibloc styrène-isoprène dans une quantité inférieure à 10% en poids dudit chewing-gum.

53. Chewing-gum selon l'une quelconque des revendications 1-52, dans lequel le chewing-gum comprend en outre au moins un polymère ayant une masse moléculaire (Mw) de 50 000 à 1 000 000 g/mol dans une quantité inférieure à 20% en poids du chewing-gum.

54. Chewing-gum selon l'une quelconque des revendications 1-52, dans lequel le chewing-gum comprend en outre au moins un polymère ayant une masse moléculaire (Mw) de 100 000 à 1 000 000 g/mol dans une quantité inférieure à 20% en poids du chewing-gum.

55. Base de gomme comprenant au moins un copolymère styrène-isoprène-styrène (SIS) dans une quantité de 0,1% à 99% en poids de la base de gomme.

56. Base de gomme selon la revendication 55, dans laquelle la base de gomme comprend du SIS dans une quantité de 0,1% à 75% en poids de la base de gomme.

57. Base de gomme selon la revendication 55 ou 56, dans laquelle la base de gomme comprend du SIS dans une quantité de 0,1% à 50% en poids de la base de gomme.

58. Base de gomme selon l'une quelconque des revendications 55-57, dans lequel la base de gomme comprend du SIS dans une quantité de 0,1% à 30% en poids de la base de gomme.

59. Base de gomme selon l'une quelconque des revendications 55-58, dans lequel le copolymère SIS est élastomère.

60. Base de gomme selon l'une quelconque des revendications 55-59, dans laquelle la base de gomme comprend en outre au moins un copolymère dibloc styrène-isoprène.

61. Base de gomme selon l'une quelconque des revendications 55-60, dans laquelle la base de gomme comprend en outre au moins un copolymère dibloc styrène-isoprène comme seul plastifiant.

62. Base de gomme selon l'une quelconque des revendications 55-61, dans laquelle le rapport entre le copolymère dibloc et le copolymère séquencé SIS est inférieur à 60 à 40.

63. Base de gomme selon l'une quelconque des revendications 55-62, dans laquelle le rapport styrène/isoprène dudit SIS est compris entre 2/98 et 85/15.

64. Base de gomme selon l'une quelconque des revendications 55-63, dans laquelle le SIS a une masse moléculaire Mw de 50 000 à 1 000 000 g/mol.

65. Base de gomme selon l'une quelconque des revendications 55-63, dans laquelle le SIS a une masse moléculaire Mw de 100 000 à 500 000 g/mol.

66. Base de gomme selon l'une quelconque des revendications 55-65, dans laquelle la base de gomme comprend de la résine synthétique et/ou naturelle dans une quantité de 1 à 95% de la base de gomme.

67. Base de gomme selon l'une quelconque des revendications 55-66, dans laquelle la base de gomme comprend de la résine synthétique et/ou naturelle dans une quantité de 3 à 70% de la base de gomme.

68. Base de gomme selon l'une quelconque des revendications 55-67, dans laquelle la base de gomme comprend de la résine synthétique et/ou naturelle dans une quantité de 5 à 55% de la base de gomme.

69. Base de gomme selon l'une quelconque des revendications 55-68, dans laquelle la base de gomme comprend une charge.

70. Base de gomme selon l'une quelconque des revendications 55-69, dans laquelle la base de gomme est granulée.

71. Base de gomme selon l'une quelconque des revendications 55-70, dans laquelle la base de gomme est sous forme de poudre.

72. Chewing-gum selon l'une quelconque des revendications 1-54, dans laquelle le chewing-gum est granulé.

73. Chewing-gum selon l'une quelconque des revendications 1-54, dans laquelle le chewing-gum est sous forme de poudre.

74. Procédé de fabrication de granules de chewing-gum pour pastillage, le procédé comprenant les étapes consistant à proposer une substance de chewing-gum selon l'une quelconque des revendications 1-54 et à granuler la substance en granules de chewing-gum.
